# EUROPÄISCHE PATENTSCHRIFT

(11) **EP 2 089 237 B1**
(45) Veröffentlichungstag und Bekanntmachung des Hinweises auf die Patenterteilung: **27.07.2016**
(21) Anmeldenummer: 07818846.3
(22) Anmeldetag: 09.10.2007
(51) Int. Cl.: B42D 25/00, B41M 3/14, G07D 7/12

(54) **ECHTHEITSMERKMAL IN FORM VON LUMINESZIERENDEN SUBSTANZEN**
AUTHENTICITY MARK IN THE FORM OF LUMINESCENT SUBSTANCES
CARACTÉRISTIQUE D'AUTHENTICITÉ SOUS FORME DE SUBSTANCES LUMINESCENTES

(30) Priorität: 10.10.2006 DE 102006047851
(43) Veröffentlichungstag der Anmeldung: 19.08.2009
(73) Patentinhaber: Giesecke & Devrient GmbH, 81677 München (DE)
(72) Erfinder: HEER, Stephan, 91667 München (DE); GIERING, Thomas, 85614 Kirchseeon (DE); STOCK, Kai Uwe, 82031 Grünwald (DE); GRAUVOGL, Gregor, 82041 Oberhaching (DE)
(74) Vertreter: Langer, Andreas
(86) Internationale Anmeldenummer: PCT/EP2007/008773
(87) Internationale Veröffentlichungsnummer: WO 2008/043522

(56) Entgegenhaltungen:
- WO-A-99/38700
- WO-A-02/070279
- WO-A-2005/036478
- WO-A-2005/036479
- WO-A-2006/005498
- WO-A-2006/024530
- DE-A1- 3 121 491
- DE-A1- 19 804 021

## Beschreibung

Die Erfindung betrifft ein bedrucktes Wertdokument mit einem Echtheitsmerkmal in Form von mindestens zwei lumineszierenden Substanzen auf der Basis von Wirtsgittern, die mit einem oder mehreren Ionen dotiert sind.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente zur Produktsicherung zu verstehen.

Die Absicherung von Wertdokumenten gegen Fälschung mittels lumineszierenden Substanzen ist bereits seit langem bekannt. Die Verwendung von Übergangsmetallen und Seltenerdmetallen als lumineszierenden Ionen wurde bereits diskutiert. Solche Ionen haben den Vorteil, dass sie, nach entsprechender Anregung, eine oder mehrere charakteristische schmalbandige Lumineszenzen zeigen, die einen sicheren Nachweis und die Abgrenzung gegenüber anderen Spektren erleichtern. Auch Kombinationen von Übergangsmetallen und/ oder Seltenerdmetallen wurden schon diskutiert. Solche Substanzen haben den Vorteil, dass, zusätzlich zu den obengenannten Lumineszenzen, sogenannte Energietransferprozesse beobachtet werden, die zu komplizierteren Spektren führen können. Bei diesen Energietransferprozessen kann ein Ion seine Energie auf ein anderes Ion übertragen und die Spektren können dann aus mehreren schmalbandigen Linien bestehen, die charakteristisch für die beiden Ionen sind.

Ein Beispiel einer bekannten lumineszierenden Substanz ist Al₂O₃ dotiert mit Cr³⁺. Diese Substanz wird auch Rubin genannt. Nach Anregung im sichtbaren Spektralbereich luminesziert der Rubin schmalbandig.

DE 198 04 021 A1 beschreibt ein Wertdokument mit zumindest einem Echtheitsmerkmal in Form einer lumineszierenden Substanz auf der Basis von dotierten Wirtsgittern. Es handelt sich dabei um Echtheitsmerkmale, die auf einem Energietransferschritt von Cr³⁺ auf ein Seltenerd Ion beruhen. Die Lumineszenz wird dann von den Seltenerd Ionen beobachtet.

EP 1370 424 B1 beschreibt ein bedrucktes Wertdokument mit zumindest einem Echtheitsmerkmal in der Form einer lumineszierenden Substanz auf der Basis von Wirtsgittern, die mit Ionen der Elektronenkonfiguration (3d)² dotiert sind. WO 2006/024530 A1 beschreibt ein Wertdokument mit einem lumineszierenden Merkmalssystem mit mindestens zwei lumineszierenden Materialien, die in Erwiderung auf eine Anregungsstrahlung überlappende Emissionen erzeugen.

Lumineszierende Substanzen, die aus einem mit Ionen dotiertem Wirtsgitter bestehen und sich zur Absicherung von Wertdokumenten eignen sind jedoch in ihrer Zahl generell beschränkt.

Schmalbandig lumineszierende Substanzen, die auf Übergangsmetallen beruhen und sich zur Absicherung von Wertdokumenten eignen sind in ihrer Zahl besonders beschränkt. Zudem haben sie den Nachteil, dass diese Lumineszenzen eine lange Lebensdauer haben.

Luminezierende Substanzen, die auf Seltenerdmetallen beruhen haben den Nachteil, dass die spektrale Lage der schmalbandigen Lumineszenzen nur sehr wenig durch das Wirtsgitter beeinflusst werden können. Zudem können die meisten Substanzen nur sehr ineffizient angeregt werden.

Ausgehend von diesem Stand der Technik liegt der Erfindung die Aufgabe zugrunde, die Anzahl von Substanzen, die sich als Echtheitskennzeichnung für Wertdokumente eignen zu erhöhen, und insbesondere neue Echtheitsmerkmale zu schaffen, das sich von Wertdokumenten mit bisher bekannten Echtheitsmerkmalen durch seine charakteristischen Eigenschaften unterscheidet.

Die Lösung dieser Aufgabe ergibt sich aus den unabhängigen Ansprüchen. Weiterbildungen sind Gegenstand der Unteransprüche.

Die Erfindung beruht auf der Erkenntnis, dass eine systematische Veränderung der Wirtsgitter und/ oder von Ionen der (nd)³ Elektronenkonfiguration eine gezielte Einstellung der Lumineszenzeigenschaften von derartigen lumineszierenden Substanzen zuläßt und deren Kombination eine Vielzahl von komplexen neuen Echtheitsmerkmalen erlaubt.

Beispielsweise können die Lumineszenzeigenschaften von (3d)³ Ionen durch die folgenden drei Parameter beschrieben werden: dem Ligandenfeldparameter Dq, dem Racah Parameter B und der effektiven Kernladungszahl Z^{eff}.

Der Ligandenfeldparameter Dq beschreibt die Aufspaltung der 3d Orbitale in einem oktaedrischen Ligandenfeld. Die Größe dieser Aufspaltung hängt von der Natur der Liganden ab. Die Verschiebung der elektronischen Zustände folgt dabei den sogenannten Tanabe-Sugano Diagrammen. Bei einem schwachen Ligandenfeld wird der lumineszierende Zustand mit dem Symmetrie-Termsymbol ⁴T₂ beschrieben und in diesem Fall wird eine breite Lumineszenz mit einer relativ kurzen Lebensdauer beobachtet, weil es sich um einen spinerlaubten Übergang handelt. Die spektrale Position dieser Lumineszenz kann durch eine geeignete Wahl des Wirtsgitters stark verschoben werden. Beim einem charakteristischen größeren Wert des Ligandenfeldparameters Dq findet ein Wechsel des tiefstliegenden elektronischen Zustandes vom ⁴T₂ zum ²E statt. In diesem Fall wird eine schmalbandige Lumineszenz mit einer relativ langen Lebenszeit beobachtet, weil es sich um einen spinverbotenen Übergang handelt. Die spektrale Position des Überganges vom ²E in den Grundzustand ⁴A₂ kann nicht durch den Ligandenfeldparameter beeinflusst werden. Jedoch kann die spektrale Position durch die gezielte Variation vom Racah Parameter B schwach aber signifikant beeinflusst werden. Der Racah Parameter B kann durch die geeignete Wahl des Wirtsgitters beeinflusst werden. Die effektive Kernladungszahl Z^{eff} nimmt bei den isoelektronischen (3d)³ Ionen in der Reihe Ti⁺, V²⁺, Cr³⁺, Mn⁴⁺ und Fe⁵⁺ zu und führt zu einer starken Verschiebung aller elektronischen Zustände zu höheren Energien.

Ein erster Hauptvorteil der erfindungsmässigen Lösung besteht darin, dass in einem ersten Schritt eine Vielzahl von lumineszierenden Substanzen gezielt hergestellt werden kann, die sich durch die spektralen Eigenschaften von bisher bekannten Echtheitsmerkmalen unterscheiden. Die schmalbandige ²E → ⁴A₂ Lumineszenz kann durch gezielte Variation des Wirtsgitters mit starkem Ligandenfeld signifikant verschoben werden. Die breitbandige ⁴T₂ → ⁴A₂ Lumineszenz kann durch gezielte Variation des Wirtsgitters mit schwachem Ligandenfeld im roten und nahen infraroten Spektralbereich stark verschoben werden.

Ein zweiter Hauptvorteil der erfindungsmässigen Lösung besteht darin, dass in einem zweiten Schritt durch die Kombination von mindestens zwei solcher lumineszierenden Substanzen eine Vielzahl von voneinander verschiedenen Codierungen erreicht werden kann.

Ein weiterer Vorteil der erfindungsmässigen Lösung besteht darin, dass die Anregungsspektren dieser lumineszierenden Substanzen im sichtbaren Spektralbereich stark verschoben werden können.

Ein weiterer Vorteil der erfindungsmässigen Lösung besteht darin, dass sich Kombination von schmalbandig lumineszierenden Substanzen in nullter Näherung wie das bekannte Rubinechtheitsmerkmal offenbaren und sich erst bei wohldefinierten Anregungs- oder Detektionsparametern von diesem unterscheiden.

Ein weiterer Vorteil der erfindungsmässigen Lösung besteht darin, dass sich eine Kombination von einem bekannten Echtheitsmerkmal, wie zum Beispiel dem Rubin, mit mindestens einer der erfindungsmässigen Substanzen in nullter Näherung wie das bekannte Echtheitsmerkmal offenbaren und sich erst bei wohldefinierten Anregungs- oder Detektionsparametern von diesem unterscheiden.

Ein weiterer Vorteil der erfindungsmässigen Lösung besteht darin, dass die breitbandig lumineszierenden Substanzen erst bei Anregungs- oder Detektionsparametern zum Vorschein kommen, die sich deutlich von denjenigen der schmalbandig lumineszierenden Substanzen unterscheiden können. Dies gilt insbesondere für die spektrale Form und die Lebensdauer der Lumineszenzen. Insbesondere kann die spektrale Position der schmal- und breitbandigen Lumineszenz derart gewählt werden, dass sie sich nicht überlappen.

Ein weiterer Vorteil der erfindungsmässigen Lösung besteht darin, dass die Wirtsgitter derart gewählt werden können, dass weitere Ionen, die nicht die Elektronenkonfiguration (nd)³ haben, in geeignete Wirtsgitter eingebracht werden können und die Komplexität des Echtheitsmerkmals weiter erhöhen.

In einer ersten vorteilhaften Ausgestaltung der Erfindung werden mindestens eine schmalbandig und mindestens eine breitbandig lumineszierende Substanz kombiniert. Die Lumineszenz der schmalbandigen Substanz beruht auf dem spinverbotenen ²E → ⁴A₂ Übergang eines mit (nd)³ Ionen dotierten Wirtsgitters mit starkem Ligandenfeld. Die Lumineszenz fällt in den spektralen Bereich 650-750 nm. Als Wirtsgitter kommen reine oder gemischte Verbindungen mit mindestens einem Vertreter aus der Gruppe der Metalle der Hauptgruppen I, II, Übergangsmetalle und/oder Seltenen Erden und mindestens einem Vertreter der Gruppe der Nichtmetalle bestehend aus den Hauptgruppen III bis VII des Periodensystems in Frage. Besonders bevorzugt sind Wirtsgitter, die ein starkes Ligandenfeld aufweisen. Die Lumineszenz der breitbandig lumineszierenden Substanz beruht auf dem spinerlaubten ⁴T₂ → ⁴A₂ Übergang eines mit (nd)³ Ionen dotierten Wirtsgitters mit schwachem Ligandenfeld. Die Lumineszenz fällt in den spektralen Bereich von 700-1000 nm. Als Wirtsgitter kommen reine oder gemischte Verbindungen mit mindestens einem Vertreter aus der Gruppe der Metalle der Hauptgruppen I, II, Übergangsmetalle und/oder Seltenen Erden und mindestens einem Vertreter der Gruppe der Nichtmetalle bestehend aus den Hauptgruppen III bis VII des Periodensystems in Frage. Besonders bevorzugt sind Wirtsgitter, die ein schwaches Ligandenfeld aufweisen.

In einer zweiten vorteilhaften Ausgestaltung der Erfindung werden mindestens zwei schmalbandig lumineszierenden Substanzen kombiniert. Die Lumineszenzen beruhen auf dem spinverbotenen ²E → ⁴A₂ Übergang von (nd)³ Ionen, die in ein Wirtsgitter mit starkem Ligandenfeld dotiert werden. Die Lumineszenzen fallen in den spektralen Bereich 650-750 nm. Als Wirtsgitter kommen reine oder gemischte Verbindungen mit mindestens einem Vertreter aus der Gruppe der Metalle der Hauptgruppen
I, II, Übergangsmetalle und/oder Seltenen Erden und mindestens einem Vertreter der Gruppe der Nichtmetalle bestehend aus den Hauptgruppen III bis VII des Periodensystems in Frage. Besonders bevorzugt sind Wirtsgitter, die ein starkes Ligandenfeld aufweisen.

Weitere Ausführungsformen und Vorteile der Erfindung werden im Folgenden anhand der Figuren, deren Beschreibungen und der Beispiele erläutert.

Es zeigt:
- Figur 1: Anregungs- und Lumineszenzspektren einer ersten Ausgestaltung einer schmalbandig und einer breitbandig lumineszierenden Substanz auf der Basis von zwei mit Cr³⁺ dotierten Wirtsgittern,
- Figur 2: Zerfallskurven der ersten Ausgestaltung einer schmalbandig und einer breitbandig lumineszierenden Substanz auf der Basis von zwei mit Cr³⁺ dotierten Wirtsgittern, wobei A) die Zerfallskurven bei verschiedener Detektionswellenlänge und B) die Zerfallskurve der Kombination der beiden Substanzen bei gleicher Wellenlänge zeigt,
- Figur 3: Lumineszenzspektren einer zweiten Ausgestaltung auf der Basis von zwei mit Cr³⁺ dotierten Wirtsgittern, die schmalbandig lumineszieren,
- Figur 4: Zerfallskurven der zweiten Ausgestaltung auf der Basis von zwei mit Cr³⁺ dotierten Wirtsgittern, die schmalbandig lumineszieren, wobei
A) die Zerfallskurven bei verschiedener Detektionswellenlänge und
B) die Zerfallskurve der Kombination der beiden Substanzen bei gleicher Wellenlänge zeigt, und
- Figur 5: ein erfindungsgemäßes Sicherheitselement im Querschintt.

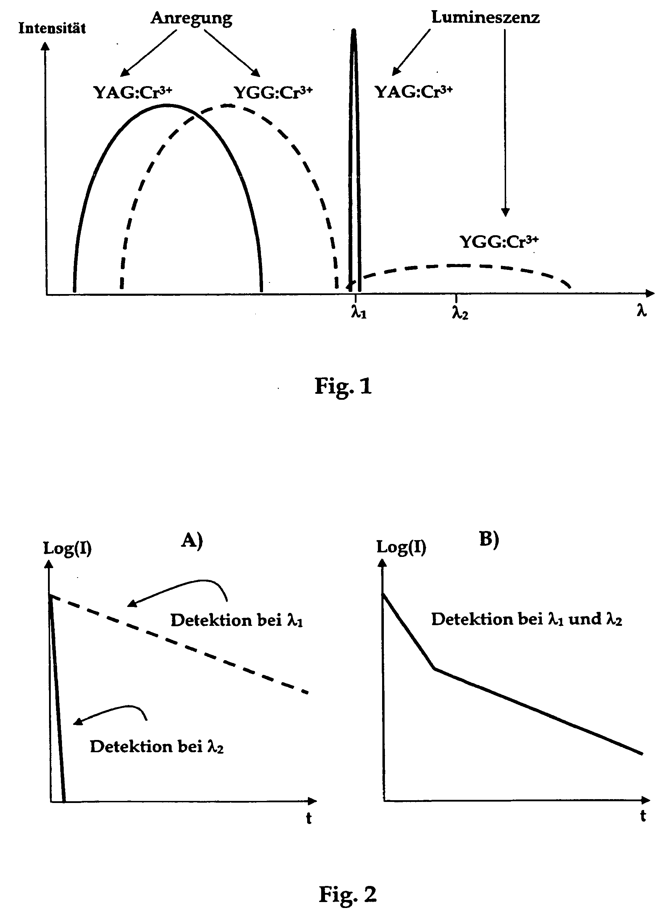

Zur Verdeutlichung der Vorteile einer ersten Ausgestaltung wird als Beispiel eine Kombination von Cr³⁺ dotiertem YAG (Y₃Al₅O₁₂) und Cr³⁺ dotiertem YGG (Y₃Ga₅O₁₂) herangezogen. Dazu dienen die Darstellungen in den Figuren 1 und 2. Cr³⁺ hat die Elektronenkonfiguration (3d)³ und luminesziert im YAG mit starkem Ligandenfeld aufgrund des spinverbotenen Überganges ²E → ⁴A₂ schmalbandig. In YGG ist das Ligandenfeld schwächer und die spinerlaubte ⁴T₂ → ⁴A₂ Lumineszenz ist breitbandig, siehe Figur 1. Die Anregungsspektren, die den ⁴T₂ → ⁴A₂ Absorptionen von Cr³⁺ folgen, sind in beiden Fällen spinerlaubt und demnach breitbandig. Aufgrund des stärkeren Ligandenfeldes in YAG relativ zu YGG liegt das Maximum des Anregungsspektrums in YAG bei kürzerer Wellenlänge. Die Zerfallskurven der beiden Lumineszenzen sind in Figur 2 dargestellt. Die schmalbandige Lumineszenz zerfällt mit einer deutlich längeren Lebenszeit als die breitbandige Lumineszenz. Diese Zerfallszeiten können entweder separat oder aber kombiniert gemessen werden, siehe Figur 2 A) und B). Bei der kombinierten Messung ergibt sich eine charakteristische Zerfallskurve, die ausgewertet werden kann. Ein Hauptvorteil dieser ersten vorteilhaften Ausgestaltung der erfindungsmässigen Lösung liegt darin, dass die breitbandige Lumineszenz nur bei wohldefinierten Detektionsparametern beobachtet wird. Die Gesamtintensität, repräsentiert als Fläche der Lumineszenzbande, kann bei der schmalbandig lumineszierenden Substanz in einem engen Wellenlängenfenster gemessen werden. Wendet man die gleichen Detektionsparameter auf die breitbandige Lumineszenz an erhält man nur einen Bruchteil der Gesamtintensität. Ein weiterer Hauptvorteil liegt darin, dass man die kritische Intensität Iₖ und die kritische Zeit tₖ durch die Wahl des Mischungsverhältnisses der schmalbandig und breitbandig lumineszierenden Substanz auf einem abzusichernden Dokument einerseits und durch die Variation der Wirtsgitter andererseits definieren kann.

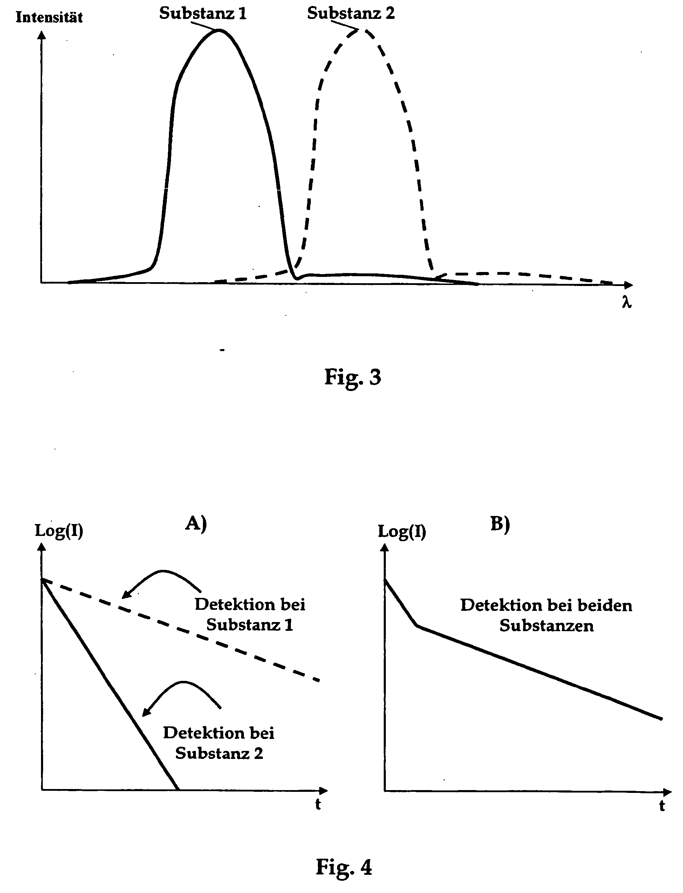

Zur Verdeutlichung der Vorteile einer zweiten Ausgestaltung wird als Beispiel eine Kombination von Cr³⁺ dotiertem YAG (Y₃Al₅O₁₂) und Cr³⁺ dotiertem YAP (YAlO₃) herangezogen. Dazu dienen die Darstellungen in den Figuren 3 und 4. Cr³⁺ hat die Elektronenkonfiguration (3d)³ und luminesziert in YAG und YAP, die beide ein starkes Ligandenfeld haben, aufgrund des spinverbotenen Überganges ²E → 4A₂ schmalbandig. Die unterschiedlichen Racah Parameter B der Cr³⁺ Ionen in diesen beiden verschiedenen Wirtsgittern sind dafür verantwortlich, dass die Hauptbande in YAG gegenüber der bei YAP verschoben ist, siehe Figur 3. Die Zerfallskurven der Lumineszenz der Cr³⁺ Ionen sind in diesen beiden Wirtsgittern auch verschieden und sind in Figur 4 dargestellt. Diese können bei wohldefinierten Detektionsparametern separat, siehe Figur 4 A), oder kombiniert, siehe Figur 4 B), gemessen werden. Ein Hauptvorteil dieser zweiten vorteilhaften Ausgestaltung der erfindungsgemäßen Lösung liegt darin, dass sich diese Kombination von zwei Echtheitsmerkmalen in nullter Näherung wie das bekannte Rubinmerkmal oder aber einfach als eine Lumineszenz im roten Spektralbereich offenbart. Erst bei wohldefinierten Detektionsparametern erscheinen zwei Banden.

Durch die Kombination mit weiteren schmalbandig und/oder breitbandig lumnineszierenden Substanzen eröffnen sich zahlreiche Möglichkeiten, die Lumineszenzeigenschaften der lumineszierenden Echtheitsmerkmale zu beeinflussen und so eine Vielzahl von verschiedenen Echtheitsmerkmalen zu produzieren.

Die erfindungsgemäßen Echtheitsmerkmale können auch mit bekannten Echtheitsmerkmalen kombiniert werden was zu einer noch größeren Vielfalt führt.

Neben der Auswertung der Lumineszenzspektren kann ebenso die Lumineszenzlebensdauer zur Unterscheidung herangezogen werden. Bei der Auswertung können neben der Energie der Lumineszenzlinien auch deren Anzahl und/oder Form und/oder deren Intensitäten berücksichtigt werden, womit sich eine beliebige Codierung darstellen lässt.

Ebenso ist es möglich weitere zusätzlicher Ionen wie andere Übergangsmetallionen oder Seltenerdmetallionen in mindestens eine der lumineszierenden Substanzen des Echtheitsmerkmals einzubringen und so eine kombinierte Lumineszenz der verschiedenen Ionen oder einen Energieübertrag zwischen den beiden Ionen in der gleichen Substanz zu erreichen.

Die Markierung kann dabei entweder an verschiedenen Stellen des Wertdokuments oder am gleichen Ort erfolgen. Wird die Markierung an verschiedenen Stellen des Wertdokuments auf- bzw. eingebracht, kann so ein räumlicher Code, im einfachsten Fall zum Beispiel ein Barcode, erzeugt werden.

Weiterhin lässt sich die Fälschungssicherheit des Wertdokuments erhöhen, wenn das lumineszierende Echtheitsmerkmal zum Beispiel in einem Wertdokument mit anderen Informationen des Wertdokuments verknüpft wird, sodass eine Überprüfung mittels eines geeigneten Algorithmus möglich ist.

Selbstverständlich kann das Wertdokument neben den erfindungsgemäßen lumineszierenden Echtheitsmerkmalen noch weitere zusätzliche Echtheitsmerkmale, die auf klassischer Lumineszenz und/oder Magnetismus beruhen, enthalten. Insbesondere eine Lumineszenz, die im Ultravioletten angeregt wird und nach Rot emittiert.

Die lumineszierenden Echtheitsmerkmale können gemäß der Erfindung auf verschiedenste Art und Weise in das Wertdokument eingebracht werden. So können die Echtheitsmerkmale beispielsweise in eine Druckfarbe eingebracht werden. Aber auch ein Zumischen der Echtheitsmerkmale zur Papiermasse oder Kunststoffmasse bei der Herstellung eines Wertdokuments auf der Basis von Papier oder Kunststoff ist möglich. Ebenso können die Echtheitsmerkmale auf oder in einem Kunststoffträgermaterial vorgesehen werden, welches beispielsweise wiederum zumindest teilweise in die Papiermasse eingearbeitet werden kann. Das Trägermaterial, dass auf einem geeigneten Polymer, wie zum Beispiel PMMA basiert und in das die erfindungsgemäßen Echtheitsmerkmale eingebettet sind, kann hierbei die Form eines Sicherheitsfadens, einer Melierfaser oder einer Planchette haben. Ebenso lassen sich zur Produktsicherung die Echtheitsmerkmale zum Beispiel direkt in das Material des abzusichernden Gegenstandes, zum Beispiel in Gehäusen und Plastikflaschen einbringen.

Das Kunststoff- oder Papierträgermaterial kann jedoch auch an jedem beliebeigen anderen Gegenstand, zum Beispiel zur Produktsicherung befestigt werden. Das Trägermaterial ist in diesem Fall vorzugsweise in der Form eines Etiketts ausgebildet. Wenn das Trägermaterial Bestandteil des zu sichernden Produkts ist, wie es zum Beispiel bei Aufreissfäden der Fall ist, ist selbstverständlich auch jede andere Formgebung möglich. In bestimmten Anwendungsfällen kann es sinnvoll sein, das Echtheitsmerkmal als unsichtbare Mischung als Beschichtung auf dem Wertdokument vorzusehen. Sie kann dabei völlig vollflächig oder auch in der Form von bestimmten Mustern, wie zum Beispiel Streifen, Linien, Kreisen oder auch in Form von alphanumerischen Zeichen vorliegen. Um die Unsichtbarkeit des Echtheitsmerkmal zu gewährleisten, muss erfindungsgemäß entweder ein farbloser Lumineszenzstoff in der Druckfarbe oder dem Beschichtungslack verwendet werden oder ein farbiger Lumineszenzstoff in einer so geringen Konzentration, dass die Transparenz der Beschichtung gerade noch gegeben ist. Alternativ oder zusätzlich kann auch das Trägermaterial bereits geeignet eingefärbt sein, so dass farbige Lumineszenzstoffe aufgrund ihrer Farbe nicht wahrgenommen werden.

Üblicherweise werden die erfindungsgemäßen Echtheitsmerkmale in Form von Pigmenten verarbeitet. Zur besseren Verarbeitung oder zur Erhöhung ihrer Stabilität können die Pigmente insbesondere als individuell verkapselte Pigmentpartikel vorliegen oder mit einem anorganischen Material oder organischen Coating überzogen werden. Beispielsweise werden die einzelnen Pigmentteilchen hierzu mit einer Silikathülle umgeben und lassen sich so leichter in Medien dispergieren. Ebenso können verschiedene Pigmentpartikel einer Kombination gemeinsam verkapselt werden, zum Beispiel in Fasern, Fäden, Silikathüllen usw. So ist es zum Beispiel nicht mehr möglich, den "Code" der Kombination zu verändern. Unter "Verkapselung" ist dabei ein vollständiges Umhüllen der Pigmentpartikel zu verstehen, während mit "Coating" auch das teilweise Umhüllen bzw. Beschichten der Pigmentpartikel gemeint ist.

Im Folgenden werden einige Beispiele für die Synthese der erfindungsgemäßen oxidischen Materialien aufgelistet:

### Beispiel 1

### Herstellung von chromaktiviertem Yttrium-Granat (Cr: Y₃Al₅O₁₂)

Es werden 42,82 g Aluminiumoxid (Al₂O₃), 0,15 g Chromoxid (Cr₂O₃), 57,03 g Yttriumoxid (Y₂O₃) abgewogen und zusammen mit 100 g entwässertem Natriumsulfat (Na₂SO₄) homogen vermischt. Die Mischung wird in Korundtiegel gefüllt und bei einer Temperatur von 1150°C für eine Dauer von 12 Stunden erhitzt. Das entstehende Reaktionsprodukt wird nach dem Abkühlen zerkleinert und im Wasserbad von Resten des Flußmittels befreit. Wenn notwendig können Reste des eingesetzten Chromoxids oder daraus entstandene Nebenprodukte, z.B. Natriumchromat, durch Schwefelsäure/Eisensulfat zu Chrom(III) reduziert werden und abgetrennt werden. Das entstandene Produkt wird abfiltriert und bei 100°C getrocknet.

### Beispiel 2

### Herstellung von chromaktiviertem Yttrium-Perowskit (Cr:YAlO₃)

Es werden 31,04 g Aluminiumoxid (Al₂O₃), 0,09 g Chromoxid (Cr₂O₃), 68,87 g Yttriumoxid (Y₂O₃) abgewogen und zusammen mit 100 g entwässertem Natriumsulfat (Na₂SO₄) homogen vermischt. Die Mischung wird in Korundtiegel gefüllt und bei einer Temperatur von 1150°C für eine Dauer von 18 Stunden erhitzt. Das entstehende Reaktionsprodukt wird nach dem Abkühlen zerkleinert und im Wasserbad von Resten des Flußmittels befreit. Wenn notwendig können Reste des eingesetzten Chromoxids oder daraus entstandene Nebenprodukte, z.B. Natriumchromat, durch Schwefelsäure/Eisensulfat zu Chrom(III) reduziert werden und abgetrennt werden. Das entstandene Produkt wird abfiltriert und bei 100°C getrocknet. Wenn gewünscht kann das Material durch Vermahlen auf die gewünschte Korngröße vermahlen werden.

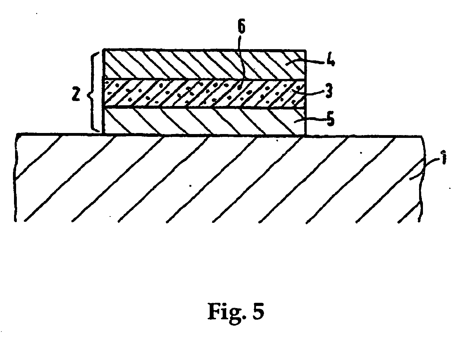

Figur 5 zeigt eine Ausführungsform des erfindungsgemäßen Sicherheitselements. Das Sicherheitselement besteht in diesem Fall aus einem Etikett 2, dass sich aus einer Papier- oder Kunststoffschicht 3, einer transparenten Abdeckschicht 4 sowie einer Klebstoffschicht 5 zusammensetzt. Dieses Etikett 2 ist über die Klebeschicht 5 mit einem beliebeigen Substrat 1 verbunden. Bei diesem Substrat 1 kann es sich um Wertdokumente, Ausweise, Pässe, Urkunden oder dergleichen aber auch um andere zu sichernde Gegenstände, wie zum Beispiel Cds, Verpackungen o. ä. handeln. Das lumineszierende Echtheitsmerkmal 6 ist in diesem Ausführungsbeispiel im Volumen der Schicht 3 enthalten.

Alternativ kann das lumineszierende Echtheitsmerkmal auch in einer nicht gezeigten Druckfarbe enthalten sein, die auf eine der Etikettenschichten, vorzugsweise auf die Oberflächen der Schicht 3 aufgedruckt wird.

Statt das lumineszierende Echtheitsmerkmal in oder auf einem Trägermaterial vorzusehen, dass anschließend als Sicherheitselement auf einen Gegenstand befestigt wird, ist es auch gemäß der Erfindung auch möglich, das lumineszierende Echtheitsmerkmal direkt in das zu sichernde Wertdokument bzw. auf dessen Oberfläche in Form einer Beschichtung vorzusehen.

## Patentansprüche

1. Echtheitsmerkmal mit mindestens zwei lumineszierenden Substanzen auf der Basis von dotierten Wirtsgittern, **dadurch gekennzeichnet, dass** die dotierten Ionen die Elektronenkonfiguration (nd)³ aufweisen,
wobei entweder mindestens eine der lumineszierenden Substanzen schmalbandig luminesziert und mindestens eine der lumineszierenden Substanzen breitbandig luminesziert und die Lumineszenz der schmalbandigen Substanz auf dem spinverbotenen ²E → ⁴A₂ Übergang eines mit (nd)³ Ionen dotierten Wirtsgitters mit starkem Ligandenfeld beruht und die schmalbandige Lumineszenz im spektralen Bereich 650-750nm liegt und die Lumineszenz der breitbandigen Substanz auf dem spinerlaubten ⁴T₂ → ⁴A₂ Übergang eines mit (nd)³ Ionen dotierten Wirtsgitters mit schwachem Ligandenfeld beruht und die breitbandige Lumineszenz im spektralen Bereich 700-1000nm liegt; oder mindestens zwei schmalbandig lumineszierende Substanzen kombiniert werden, deren Lumineszenzen auf dem spinverbotenen ²E → ⁴A₂ Übergang von (nd)³ Ionen, die in ein Wirtsgitter mit starkem Ligandenfeld dotiert sind, beruhen und deren Lumineszenzen im spektralen Bereich 650-750nm liegen.

2. Echtheitsmerkmal nach Anspruch 1, wobei es sich bei den dotierten Ionen um Titan in der Oxidationsstufe 1 oder Vanadium in der Oxidationsstufe 2 oder Chrom in der Oxidationsstufe 3 oder Mangan in der Oxidationsstufe 4 oder Eisen in der Oxidationsstufe 5 handelt.

3. Echtheitsmerkmal nach Anspruch 1, wobei es sich bei den dotierten Ionen um Ionen mit der (nd)³ Elektronenkonfiguration mit n=4 oder n=5 handelt.

4. Echtheitsmerkmal nach Anspruch 1 bis 3, wobei es sich bei den Wirtsgittern um reine oder gemischte Verbindungen mit mindestens einem Vertreter aus der Gruppe der Metalle der Hauptgruppen I, II, Übergangsmetalle und/ oder Seltenen Erden und mindestens einem Vertreter aus den Hauptgruppen III bis VII des Periodensystems der Elemente handelt.

5. Echtheitsmerkmal nach einem der Ansprüche 1 bis 4, wobei mindestens eines der Wirtsgitter zusätzlich mit wenigstens einem Vertreter aus der Gruppe der Seltenerdmetalle dotiert ist.

6. Echtheitsmerkmal nach einem der Ansprüche 1 bis 5, wobei das Echtheitsmerkmal in der Form von Pigmentpartikeln vorliegt.

7. Echtheitsmerkmal nach einem der Ansprüche 1 bis 6, wobei das Echtheitsmerkmal mit mindestens einem anderen Echtheitsmerkmal kombiniert wird.

8. Echtheitsmerkmal nach einem der Ansprüche 1 bis 7, wobei das Echtheitsmerkmal einer Druckfarbe zugemischt ist.

9. Wertdokument mit einem Echtheitsmerkmal nach wenigstens einem der Ansprüche 1 bis 8, wobei das Wertdokument aus Papier oder Kunststoff besteht.

10. Wertdokument nach Anspruch 9, wobei das Echtheitsmerkmal in das Volumen des Wertdokumentes eingebracht und/oder in einer auf dem Wertdokument aufgebrachten Schicht vorliegt.

11. Wertdokument nach Anspruch 9 oder 10, wobei das Echtheitsmerkmal als unsichtbare, zumindest teilweise Beschichtung auf dem Wertdokument vorgesehen ist.

12. Sicherheitselement, welches ein Trägerelement und zumindest ein Echtheitsmerkmal gemäß einem der Ansprüche 1 bis 8 aufweist, wobei das Echtheitsmerkmal in dem Trägermaterial eingebettet und/oder auf das Trägermaterial aufgebracht ist.

13. Sicherheitselement nach Anspruch 12, wobei das Sicherheitselement die Form eines Streifens oder Bandes aufweist.

14. Sicherheitselement nach Anspruch 12 oder 13, wobei das Trägermaterial als Sicherheitsfaden, Planchette oder Melierfaser ausgebildet ist.

15. Sicherheitselement nach einem der Ansprüche 12 bis 14, wobei das Sicherheitselement als Etikett ausgebildet ist.

16. Verfahren zur Herstellung eines Wertdokumentes nach wenigstens einem der Ansprüche 9 bis 11 oder eines Sicherheitselements nach einem der Ansprüche 12 bis 15, wobei das Echtheitsmerkmal einer Druckfarbe zugesetzt wird.

17. Verfahren zur Herstellung eines Wertdokumentes nach einem der Ansprüche 9 bis 11 oder eines Sicherheitselements nach einem der Ansprüche 12 bis 15, wobei das Echtheitsmerkmal durch einen Beschichtungsprozess aufgetragen wird.

18. Verfahren zur Herstellung eines Wertdokumentes nach wenigstens einem der Ansprüche 9 bis 11 oder eines Sicherheitselements nach einem der Ansprüche 12 bis 15, wobei das Sicherheitsmerkmal in das Volumen des Wertdokumentes eingearbeitet wird.

19. Verfahren zur Herstellung eines Wertdokumentes nach einem der Ansprüche 9 bis 11 oder eines Sicherheitselements nach einem der Ansprüche 12 bis 15, wobei das Echtheitsmerkmal dem Wertdokument und/oder dem Sicherheitselement mittels Melierfasern zugeführt wird.

20. Verfahren zu Herstellung eines Wertdokumentes nach einem der Ansprüche 9 bis 11 oder eines Sicherheitselements nach einem der Ansprüche 12 bis 15, wobei das Echtheitsmerkmal dem Wertdokument und/oder dem Sicherheitselement mittels eines Sicherheitsfadens zugeführt wird.

21. Prüfverfahren zur Echtheitsprüfung eines Echtheitsmerkmals nach einem der Ansprüche 1 bis 8 oder eines Wertdokuments nach einem der Ansprüche 9 bis 11 oder eines Sicherheitselements nach einem der Ansprüche 12 bis 15, wobei mindestens eine Eigenschaft des Echtheitsmerkmals ausgewertet wird, wobei die Lumineszenzzerfallskurven des Echtheitsmerkmals ausgewertet werden.

22. Prüfverfahren nach Anspruch 21, wobei zusätzlich Wellenlängen und/oder Anzahl und/oder die Form und/oder die Intensitäten der Emissionslinien des Echtheitsmerkmals ausgewertet werden.

23. Prüfverfahren nach Anspruch 21 oder 22, wobei die Auswertung bei verschiedenen Temperaturen erfolgt.

24. Prüfverfahren nach einem der Ansprüche 21 bis 23, wobei bei der Auswertung eine räumliche Verteilung des Echtheitsmerkmals überprüft wird.

25. Prüfverfahren nach Anspruch 21, wobei die Lumineszenzzerfallskurven des Echtheitsmerkmals kombiniert gemessen werden und eine charakteristische Zerfallskurve ausgewertet wird.

## Claims

1. An authenticity feature with at least two luminescent substances on the basis of doped host lattices, **characterized in that** the doped ions have the (nd)³ electron configuration,
wherein either at least one of the luminescent substances luminesce in a narrow-band fashion and at least one of the luminescent substances luminesce in a broad-band fashion and the luminescence of the narrow-band substance is based on the spin-forbidden ²E→4 A₂ transition of an (nd)³-ions-doped host lattice with strong ligand field and the narrow-band luminescence is in the spectral range of 650-750nm and the luminescence of the broad-band substance is based on the spin-allowed 4T₂→⁴A₂ transition of an (nd)³-ions-doped host lattice with weak ligand field and the broad-band luminescence is in the spectral range of 700-1000nm; or at least two substances luminescent in a narrow-band fashion are combined, whose luminescences are based on the spin-forbidden ²E→⁴A₂ transition of (nd)³ ions which are doped in a host lattice with strong ligand field and whose luminescences are in the spectral range of 650-750nm.

2. The authenticity feature according to claim 1, wherein the doped ions are titanium in the oxidation state 1 or vanadium in the oxidation state 2 or chromium in the oxidation state 3 or manganese in the oxidation state 4 or iron in the oxidation state 5.

3. The authenticity feature according to claim 1, wherein the doped ions are ions with the (nd)³ electron configuration with n=4 or n=5.

4. The authenticity feature according to claims 1 to 3, wherein the host lattices are pure or mixed compounds with at least one representative from the group of the metals of the main groups I, II, transition metals and/ or rare earths and at least one representative from the main groups III to VII of the periodic system of elements.

5. The authenticity feature according to any of claims 1 to 4, wherein at least one of the host lattices is additionally doped with at least one representative from the group of the rare earth metals.

6. The authenticity feature according to any of claims 1 to 5, wherein the authenticity feature is present in the form of pigment particles.

7. The authenticity feature according to any of claims 1 to 6, wherein the authenticity feature is combined with at least one different authenticity feature.

8. The authenticity feature according to any of claims 1 to 7, wherein the authenticity feature is admixed to a printing ink.

9. A document of value having an authenticity feature according to at least one of claims 1 to 8, wherein the document of value is made of paper or plastic.

10. The document of value according to claim 9, wherein the authenticity feature is incorporated in the volume of the document of value and/or is present in one of the layers applied on the document of value.

11. The document of value according to claim 9 or 10, wherein the authenticity feature is provided as invisible, at least partial coating on the document of value.

12. A security element, which has a carrier element and at least one authenticity feature according to any of the claims 1 to 8, wherein the authenticity feature is embedded in the carrier material and/ or is applied on the carrier material.

13. The security element according to claim 12, wherein the security element has the form of a strip or band.

14. The security element according to claim 12 or 13, wherein the carrier material is formed as a security thread, planchet or mottling fiber.

15. The security element according to any of claims 12 to 14, wherein the security element is formed as a label.

16. A method for producing a document of value according to at least one of claims 9 to 11 or a security element according to any of claims 12 to 15, wherein the authenticity feature is added to a printing ink.

17. The method for producing a document of value according to any of claims 9 to 11 or a security element according to any of claims 12 to 15, wherein the authenticity feature is applied by a coating process.

18. The method for producing a document of value according to at least one of claims 9 to 11 or a security element according to any of claims 12 to 15, wherein the security feature is incorporated into the volume of the document of value.

19. The method for producing a document of value according to any of claims 9 to 11 or a security element according to any of claims 12 to 15, wherein the authenticity feature is supplied to the document of value and/ or the security element by means of mottling fibers.

20. The method for producing a document of value according to any of claims 9 to 11 or a security element according to any of claims 12 to 15, wherein the authenticity feature is supplied to the document of value and/ or the security element by means of a security thread.

21. A test method for authenticity testing an authenticity feature according to any of claims 1 to 8 or a document of value according to any of claims 9 to 11 or a security element according to any of claims 12 to 15, wherein at least one property of the authenticity feature is evaluated, wherein the luminescence decay curves of the authenticity feature are evaluated.

22. The test method according to claim 21, wherein, additionally, wavelengths and/or number and/ or the shape and/ or the intensities of the emission lines of the authenticity feature are evaluated.

23. The test method according to claim 21 or 22, wherein the evaluation is effected at different temperatures.

24. The test method according to any of claims 21 to 23, wherein when evaluating a spatial distribution of the authenticity feature is tested.

25. The test method according to claim 21, wherein the luminescence decay curves of the authenticity feature are measured in a combined fashion and the characteristic decay curve is evaluated.

## Revendications

1. Caractéristique d'authenticité comportant au moins deux substances luminescentes sur la base de réseaux hôtes dopés, **caractérisée en ce que** les ions dopés présentent la configuration d'électrons (nd)³,
cependant que, soit au moins une des substances luminescentes émet de la luminescence à bande étroite et au moins une des substances luminescentes émet de la luminescence à bande large et la luminescence de la substance à bande étroite repose sur la transition interdite de spin ²E →⁴A₂ d'un réseau hôte à champ de ligands fort dopé avec des ions (nd)³ et la luminescence à bande étroite se situe dans le domaine spectral situé entre 650 et 750 nm et la luminescence de la substance à bande large repose sur la transition autorisée de spin ⁴T₂ → ⁴A₂ d'un réseau hôte à champ de ligands faible dopé avec des ions (nd)³ et la luminescence à bande large se trouve dans
le domaine spectral situé entre 700 et 1000 nm;
soit au moins deux substances luminescentes en bande étroite sont combinées, dont les luminescences reposent sur la transition interdite de spin ²E→⁴A₂ d'ions (nd)³ qui sont dopés dans un réseau hôte à champ de ligands fort et dont les luminescences se situent dans le domaine spectral situé entre 650 et 750 nm.

2. Caractéristique d'authenticité selon la revendication 1, les ions dopés consistant en du titane au degré d'oxydation 1 ou en du vanadium au degré d'oxydation 2 ou en du chrome au degré d'oxydation 3 ou en du manganèse au degré d'oxydation 4 ou en du fer au degré d'oxydation 5.

3. Caractéristique d'authenticité selon la revendication 1, les ions dopés consistant en des ions ayant la configuration d'électrons (nd)³ avec n=4 ou n=5.

4. Caractéristique d'authenticité selon la revendication de 1 à 3, les réseaux hôtes consistant en des composés purs ou mixtes comprenant au moins un représentant du groupe des métaux des groupes principaux I, II, métaux de transition et/ou terres rares et au moins un représentant des groupes principaux de III à VII du tableau périodique des éléments.

5. Caractéristique d'authenticité selon une des revendications de 1 à 4, au moins un des réseaux hôtes étant en outre dopé avec au moins un représentant du groupe des métaux des terres rares.

6. Caractéristique d'authenticité selon une des revendications de 1 à 5, la caractéristique d'authenticité se trouvant sous forme de particules de pigment.

7. Caractéristique d'authenticité selon une des revendications de 1 à 6, la caractéristique d'authenticité étant combinée avec au moins une autre caractéristique d'authenticité.

8. Caractéristique d'authenticité selon une des revendications de 1 à 7, la caractéristique d'authenticité étant ajoutée et mélangée à une encre d'impression.

9. Document de valeur comportant une caractéristique d'authenticité selon au moins une des revendications de 1 à 8, le document de valeur se composant de papier ou de matière plastique.

10. Document de valeur selon la revendication 9, la caractéristique d'authenticité étant incorporée dans le volume du document de valeur et/ou se trouvant dans une couche appliquée sur le document de valeur.

11. Document de valeur selon la revendication 9 ou 10, la caractéristique d'authenticité étant prévue en tant que revêtement invisible au moins partiel sur le document de valeur.

12. Élément de sécurité comportant un élément support et au moins une caractéristique d'authenticité selon une des revendications de 1 à 8, la caractéristique d'authenticité étant intégrée dans le matériau support et/ou appliquée sur le matériau support.

13. Élément de sécurité selon la revendication 12, l'élément de sécurité ayant la forme d'un ruban ou d'une bande.

14. Élément de sécurité selon la revendication 12 ou 13, le matériau support étant réalisé sous forme de fil de sécurité, de planchette ou de fibres chinées.

15. Élément de sécurité selon une des revendications de 12 à 14, l'élément de sécurité étant réalisé sous forme d'étiquette.

16. Procédé de fabrication d'un document de valeur selon au moins une des revendications de 9 à 11 ou d'un élément de sécurité selon une des revendications de 12 à 15, la caractéristique d'authenticité étant ajoutée à une encre d'impression.

17. Procédé de fabrication d'un document de valeur selon une des revendications de 9 à 11 ou d'un élément de sécurité selon une des revendications de 12 à 15, la caractéristique d'authenticité étant appliquée par un processus de revêtement.

18. Procédé de fabrication d'un document de valeur selon au moins une des revendications de 9 à 11 ou d'un élément de sécurité selon une des revendications de 12 à 15, la caractéristique d'authenticité étant insérée dans le volume du document de valeur.

19. Procédé de fabrication d'un document de valeur selon une des revendications de 9 à 11 ou d'un élément de sécurité selon une des revendications de 12 à 15, la caractéristique d'authenticité étant adjointe au document de valeur et/ou à l'élément de sécurité au moyen de fibres chinées.

20. Procédé de fabrication d'un document de valeur selon une des revendications de 9 à 11 ou d'un élément de sécurité selon une des revendications de 12 à 15, la caractéristique d'authenticité étant adjointe au document de valeur et/ou à l'élément de sécurité au moyen d'un fil de sécurité.

21. Procédé de contrôle de l'authenticité d'une caractéristique d'authenticité selon une des revendications de 1 à 8 ou d'un document de valeur selon une des revendications de 9 à 11 ou d'un élément de sécurité selon une des revendications de 12 à 15, au moins une propriété de la caractéristique d'authenticité étant évaluée, les courbes de décroissance de la luminescence de la caractéristique d'authenticité étant évaluées.

22. Procédé de contrôle selon la revendication 21, cependant que, en outre, des longueurs d'ondes et/ou un nombre et/ou la forme et/ou les intensités des raies d'émission de la caractéristique d'authenticité sont évaluées.

23. Procédé de contrôle selon la revendication 21 ou 22, l'évaluation ayant lieu à différentes températures.

24. Procédé de contrôle selon une des revendications de 21 à 23, cependant que, lors de l'évaluation, une répartition spatiale de la caractéristique d'authenticité est contrôlée.

25. Procédé de contrôle selon la revendication 21, les courbes de décroissance de la luminescence de la caractéristique d'authenticité étant mesurées de manière combinée et une courbe caractéristique de décroissance étant évaluée.
